# DEMANDE DE BREVET EUROPEEN

(11) **EP 0 673 079 A1**
(43) Date de publication de la demande: **20.09.1995**
(21) Numéro de dépôt: 95410016.0
(22) Date de dépôt: 13.03.1995
(51) Int. Cl.: H01R 4/30

(54) **Borne de raccordement à parois minces pour un appareillage électrique**

(30) Priorité: 14.03.1994 FR 9403034
(71) Demandeur: SCHNEIDER ELECTRIC SA, F-92100 Boulogne-Billancourt (FR)
(72) Inventeur: Vial, Denis, F-38050 Grenoble Cedex 09 (FR); Descollaz, Charles, F-38050 Grenoble Cedex 09 (FR)
(74) Mandataire: Hecke, Gérard

(57) **Abrégé**

La présente invention concerne une borne de raccordement à parois minces pour un appareillage électrique.

La borne (10) comporte une cage (11) pourvue d'une ouverture traversante pour permettre le passage d'un fil ou câble électrique (12) à raccorder. A cet effet, il est serré par une vis de serrage (14) contre une plage de contact (13) et le filetage correspondant des parois de la cage est constitué d'un filet de forme dissymétrique en dents de scie.

Cette forme de filets a l'avantage de réduire les contraintes radiales sur la cage au moment du serrage de câble par la vis.

## Description

L'invention concerne une borne de raccordement à parois minces pour un appareillage électrique, comportant une cage pourvue d'une ouverture traversante pour le passage d'un fil ou d'un câble électrique, d'une plage de contact disposée au fond de cette cage, d'une vis de serrage filetée engagée dans cette cage du côté opposé audit fond, les parois de la cage étant équipées d'un premier filetage coopérant avec un deuxième filetage conjugué de ladite vis de serrage.

De nombreux appareillages électriques sont équipés de bornes de raccordement ayant une cage à parois minces destinée à recevoir une vis de serrage d'un conducteur électrique constitué habituellement par un tronçon dénudé d'un câble électrique. A cet effet, les parois intérieures ou flancs de la cage sont pourvues d'un filetage approprié qui est, dans toutes les bornes connues, constitué d'un filet symétrique, standard correspondant aux normes ISO. Les deux flancs du filet forment un angle de 30° par rapport à un plan médian. Lorsqu'un couple de serrage relativement important est appliqué sur la vis, la composante radiale de la force exercée par la vis sur les parois latérales de la cage est loin d'être négligeable et peut entraîner une déformation permanente, voire une rupture desdites parois, notamment lorsqu'elles sont minces et réalisées en un métal léger et peu résistant tel que l'aluminium.

Par voie de conséquence, les bornes connues à filetage symétrique et à parois minces ne peuvent être utilisées que si on limite le couple de serrage de la vis, en dessous d'un couple seuil au-delà duquel les forces radiales sont susceptibles d'endommager la cage.

Cette restriction constitue un inconvénient qui limite fortement l'utilisation généralisée de ce type de bornes économiques et peu encombrantes.

On connaît par ailleurs des filetages dont les filets ont un profil quadrangulaire, carré ou rectangulaire, ou un profil trapézoïdal. S'il est vrai que ces filetages permettent de réduire l'effort radial sur les parois de la cage de la borne, lors du serrage de cette vis, cette réalisation est encombrante et ne permet pas la mise en place d'un grand nombre de filets sur une longueur de vis réduite. La vis s'en trouve affaiblie, ce qui représente un inconvénient qui limite l'utilisation de ce type de filetage.

La présente invention se propose de pallier ces inconvénients en réalisant une borne dans laquelle le risque d'endommagements dus à un serrage de couple élevé est considérablement réduit, pour ne pas dire complètement supprimé.

Ce but est atteint par la borne selon l'invention, caractérisée en ce que ledit premier ou deuxième filetage comporte un filet de profil dissymétrique en forme de dents de scie.

Dans la forme de réalisation préférée de la borne, ledit filet de profil dissymétrique forme avec un plan de coupe transversal, perpendiculaire à l'axe de la vis et passant par un sommet de ce filet, un premier angle compris entre 0 et 15°, et de préférence approximativement égal à 10°, avec un des flancs du filet, et un deuxième angle compris entre 35 et 50°, et de préférence approximativement égal à 45°, avec l'autre flanc du filet.

La présente invention sera mieux comprise en référence à la description d'un mode de réalisation préféré donné à titre d'exemple non limitatif et aux dessins annexés dans lesquels :
la figure 1 représente une vue en coupe axiale, selon la ligne 2-2 de la figure 2, de la borne selon l'invention utilisée pour raccorder un câble électrique relativement gros,
la figure 2 représente une vue en coupe axiale selon la ligne 1-1 de la borne illustrée par la figure 1, le plan de coupe étant perpendiculaire à celui de cette figure,
la figure 3 est une vue similaire à celle de la figure 1, représentant une coupe selon la ligne 4-4 de la figure 4, la borne étant utilisée pour raccorder un câble électrique relativement fin,
la figure 4 est une vue similaire à celle de la figure 2, représentant une coupe selon la ligne 3-3 de la figure 3,
la figure 5 représente une vue partielle en coupe transversale du filetage des parois de la cage et de la vis de serrage correspondante, d'une borne de raccordement connue, et
la figure 6 représente une vue partielle en coupe transversale du filetage des parois de la cage et de la vis de serrage d'une borne selon l'invention.

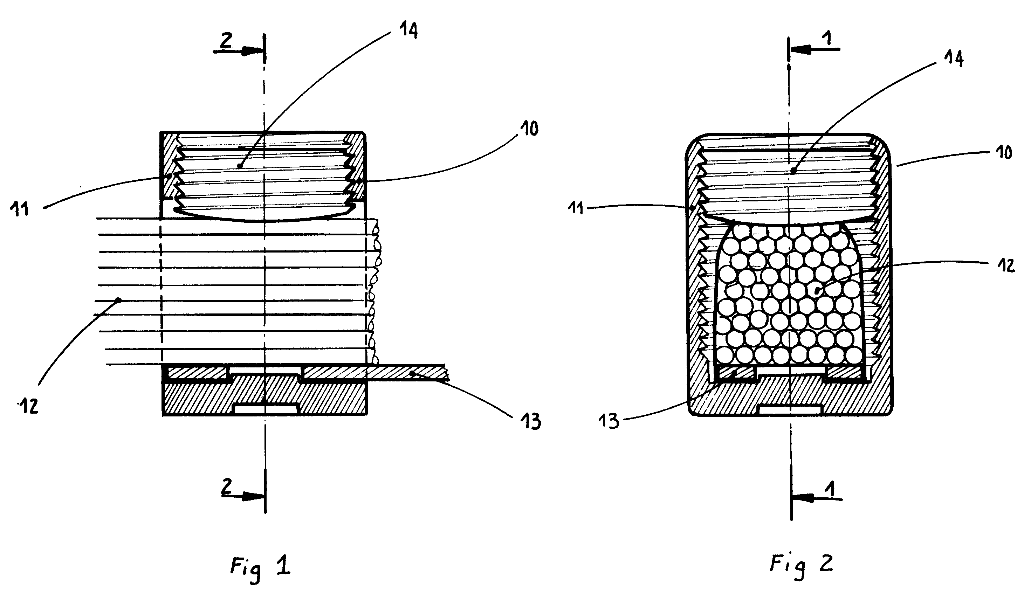

En référence aux figures 1 et 2, la borne 10 comporte une cage 11 en aluminium pourvue d'une ouverture traversante pour permettre le passage d'un fil ou câble électrique dénudé 12 destiné à être raccordé. Dans l'exemple représenté, le câble 12 est de gros diamètre et remplit approximativement toute l'ouverture ménagée dans ladite cage. Au fond de la cage, est disposée une plage de contact 13 couplée à un circuit de l'appareillage électrique sur lequel est montée ladite borne. Une vis 14, qui est de préférence une vis du type Imbus dont la tête est pourvue d'une cavité de section hexagonale ou similaire, assure le serrage du câble contre la plage de contact.

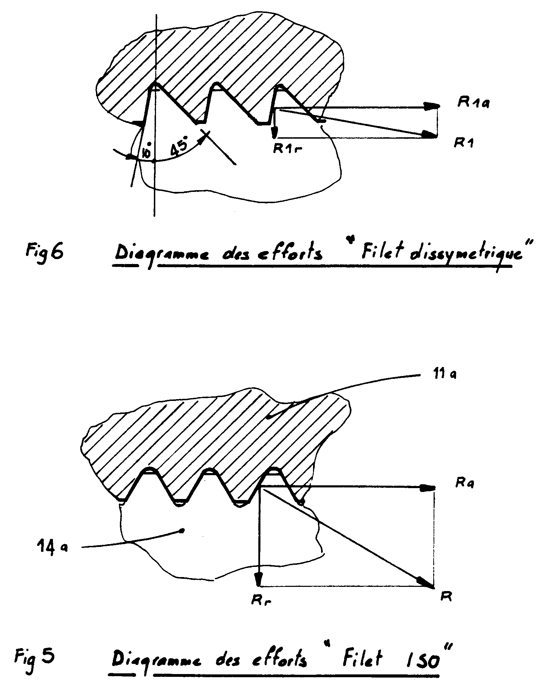

La vis et la cage sont filetées et le filetage est constitué par des filets de profil dissymétrique en dents de scie, tels que représentés plus en détail par la figure 6.

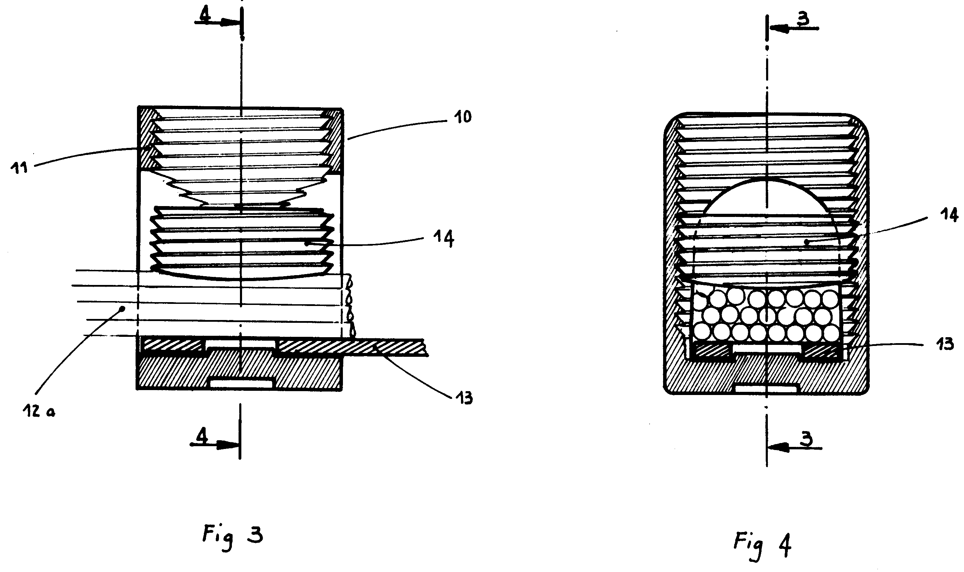

Les figures 3 et 4 représentent la borne 10 avec sa cage 11 dont l'ouverture traversante loge un fil ou câble électrique 12a de faible diamètre. Dans ce cas, la vis 14 est complètement noyée à l'intérieur de la cavité de la cage, ceci afin d'assurer un serrage du câble 12a contre la plage de contact 13.

Dans les deux formes réalisées, représentées d'un part par les figures 1 et 2 et d'autre part par les figures 3 et 4, les filetages de la vis et de la cage ont le même profil dissymétrique. En outre, dans les deux cas, la vis a une dimension transversale relativement grande par rapport à sa hauteur. Ceci est rendu possible parce que la cage a des parois de faible épaisseur, ce qui les rend fragiles. Pour contrer cette fragilisation, le filetage de la vis 14 est rendu asymétrique afin de minimiser les contraintes radiales sur les parois de la cage.

La figure 5 illustre un filetage classique standard, les deux flancs des filets étant symétriques et formant un angle d'environ 45° avec un plan transversal Δ, perpendiculaire à l'axe de la vis 14a, engagée dans la cage 11a. La force exercée par la vis sur la cage génère une réaction R perpendiculaire à la surface du flanc du filet. Cette réaction R se décompose en deux composantes Ra et Rr respectivement axiale et radiale. On constate que, dans ce cas, la composante radiale est relativement importante, ce qui engendre les inconvénients spécifiés ci-dessus.

La figure 6 illustre le filetage selon l'invention, où les deux flancs des filets sont dissymétriques et forment avec un plan transversal Δ, perpendiculaire à l'axe de la vis et passant par le sommet du filet, des angles respectivement compris entre 0 et 15° et de préférence voisin de 10°, et compris entre 35 et 50° et de préférence voisin de 45°. Dans ce cas, la réaction R₁ a deux composantes R₁ₐ et R₁ᵣ, respectivement axiale et radiale. La composante radiale R₁ᵣ est sensiblement plus faible que la composante radiale Rr représentée à la la figure 5.

En conséquence, l'objectif recherché a été atteint.

## Revendications

1. Borne de raccordement à parois minces pour un appareillage électrique, comportant une cage (11) pourvue d'une ouverture traversante pour le passage d'un fil ou d'un câble (12) électrique, d'une plage de contact (13) disposée au fond de la cage (11), d'une vis de serrage (14) filetée engagée dans cette cage du côté opposé audit fond, les parois de la cage étant équipées d'un premier filetage coopérant avec un deuxième filetage conjugué de ladite vis de serrage,
caractérisée en ce que ledit premier ou deuxième filetage comporte un filet de profil dissymétrique en forme de dents de scie, ledit filet dissymétrique formant avec un plan de coupe transversal, perpendiculaire à l'axe de la vis et passant par un sommet de ce filet, un premier angle compris entre 0 et 15°, et de préférence approximativement égal à 10°, avec un des flancs du filet, et un deuxième angle compris entre 35 et 50°, et de préférence approximativement égal à 45°, avec l'autre flanc du filet.

2. Borne selon la revendication 1, caractérisée en ce que la cage (11) possède des parois de faible épaisseur et est réalisée en aluminium.
